(19) **Europäisches Patentamt / European Patent Office / Office européen des brevets**

(11) **EP 2 507 101 B1**

(12) **FASCICULE DE BREVET EUROPEEN**

(45) Date de publication et mention
de la délivrance du brevet:
**30.03.2016 Bulletin 2016/13**

(21) Numéro de dépôt: **10793006.7**

(22) Date de dépôt: **18.11.2010**

(51) Int Cl.:
***B60T 7/12*** *(2006.01)* ***B60W 10/18*** *(2012.01)*

(86) Numéro de dépôt international:
**PCT/FR2010/052444**

(87) Numéro de publication internationale:
**WO 2011/064486 (03.06.2011 Gazette 2011/22)**

(54) **PROCEDE DE DETERMINATION DE L'INCLINAISON D'UNE ROUTE**

VERFAHREN ZUR BESTIMMUNG DES GEFÄLLES EINER STRASSE

METHOD FOR DETERMINING THE GRADIENT OF A ROAD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2009 FR 0905761**

(43) Date de publication de la demande:
**10.10.2012 Bulletin 2012/41**

(73) Titulaire: **Renault S.A.S.**
**92100 Boulogne-Billancourt (FR)**

(72) Inventeurs:
• **BORSOTTO, Bastien**
**F-83300 Draguignan (FR)**
• **PLANCON, Sébastien**
**F-91390 Morsang sur Orge (FR)**
• **ZAOUI, Kamal**
**F-78120 Rambouillet (FR)**

(56) Documents cités:
**US-A1- 2008 086 252**

**Description**

Domaine technique auquel se rapporte l'invention

La présente invention concerne un procédé de détermination de l'inclinaison d'une route sur laquelle roule un véhicule, selon lequel, à un instant t :

a) on mesure la vitesse de rotation des roues du véhicule et on en déduit l'accélération motrice Am(t) du véhicule à cet instant t,
b) on mesure l'accélération totale At(t) du véhicule à cet instant t,
c) on calcule l'accélération résultante Ar(t) du véhicule à l'instant t qui est égale à la soustraction de l'accélération motrice Am(t) à l'accélération totale At(t) du véhicule à cet instant t,
h) on détermine l'inclinaison de la route I(t), Ip(t) à l'instant t en fonction de cette accélération résultante Ar(t) calculée.

Le document US 2008/086252 décrit un procédé de ce type.

ARRIERE-PLAN TECHNOLOGIQIJE

Les procédés de détermination de l'inclinaison de la route connus reposent sur le calcul de l'accélération résultante Ar(t) du véhicule à l'instant t qui est égale à la soustraction de l'accélération motrice Am(t) à l'accélération totale At(t) du véhicule. Dans ces procédés connus, l'accélération motrice Am(t) du véhicule est déduite de la vitesse de rotation des roues du véhicule et l'accélération totale At(t) du véhicule est mesurée par un accéléromètre placé dans le véhicule.

Ces procédés présentent l'inconvénient de ne pas permettre la détermination de l'inclinaison de la route aux instants t où le véhicule est à l'arrêt, où le véhicule roule à vitesse faible, et où le véhicule ralentit lors d'un freinage.

Lorsque l'une de ces trois situations se présente, les procédés connus stoppent la détermination de l'inclinaison de la route en cours.

OBJET DE L'INVENTION

Un but de la présente invention est de fournir un procédé permettant de déterminer l'inclinaison de la route à chaque instant t, y compris à l'arrêt, lors du démarrage ou des déplacements à très faibles vitesses et lors du freinage.

A cet effet, on propose selon l'invention un procédé tel que décrit en introduction, selon lequel on réalise en outre, à la suite de l'étape d), les étapes suivantes :

d) on calcule à cet instant t, la pente instantanée P(t) à l'instant t du signal représentatif de l'accélération résultante Ar(T) en fonction du temps T,
e) on compare cette pente instantanée P(t) calculée à une valeur seuil PMAX prédéterminée, et,
f) si la pente instantanée P(t) calculée est supérieure à ladite valeur seuil PMAX, on corrige l'accélération résultante Ar(t) calculée à l'instant t pour imposer que cette pente instantanée P(t) soit égale audit instant t à ladite valeur seuil PMAX prédéterminée,
g) on utilise cette accélération résultante Ar(t) corrigée pour déterminer l'inclinaison de la route I(t), Ip(t) à l'instant t à l'étape h).

Ainsi, le procédé selon l'invention autorise la détermination de l'inclinaison de la route quelque soit les conditions de fonctionnement du véhicule et en particulier, à l'arrêt, lors du démarrage ou des déplacements à très faibles vitesses et lors du freinage. Pour cela, la pente du signal représentant l'accélération résultante en fonction du temps, c'est-à-dire la vitesse de variation de cette accélération résultante, est limitée à une valeur maximale afin de corriger les valeurs erronées de l'accélération résultante qui sont obtenues dans certaines conditions de fonctionnement du véhicule.

Lors du démarrage, les capteurs de vitesses des roues du véhicule ne détectent pas immédiatement la mise en rotation des roues, alors que l'accéléromètre mesure immédiatement l'accélération totale du véhicule. La valeur de l'accélération résultante calculée est faussée : celle-ci augmente beaucoup trop vite puisque l'accélération motrice est mesurée de façon erronée comme étant égale à zéro.

Lors de l'arrêt ou du freinage du véhicule, le basculement de la caisse du véhicule vers l'avant sous l'effet de son inertie fausse les mesures de l'accélération totale relevées par l'accéléromètre alors que les capteurs de vitesses des roues du véhicule indiquent immédiatement une vitesse nulle ou faible. L'accéléromètre enregistre alors des oscillations de l'accélération totale. L'accélération résultante oscille alors avec les mesures de l'accélération totale.

Le procédé selon l'invention permet une détermination plus précise de l'inclinaison de la route en prenant en compte ces situations.

Selon d'autres caractéristiques avantageuses et non limitatives du procédé selon l'invention,

- la valeur seuil PMAX utilisée à l'étape e), est fonction de paramètres de fonctionnement du véhicule à l'instant t ;
- on déclenche, en fonction des paramètres de fonctionnement du moteur, la réalisation des étapes d) à g) et on répète ces étapes à chaque instant ultérieur au déclenchement pendant une durée prédéterminée DT1, DT2, DT3 au moins en fonction desdits paramètres de fonctionnement du véhicule à l'instant du déclenchement, en utilisant la valeur seuil PMAX de la pente instantanée prédéterminée correspondant aux paramètres de fonctionnement du véhicule à l'instant du déclenchement ;
- on détermine ladite durée prédéterminée en fonction du véhicule concerné et en fonction desdits paramètres de fonctionnement du véhicule, par une étape de calibrage ;
- lesdits paramètres de fonctionnement du véhicule comportant la vitesse de rotation des roues, on déclenche la réalisation des étapes d) à g), en utilisant une première valeur seuil PMAX1 de la pente instantanée, à chaque instant t où la vitesse de rotation des roues du véhicule passe d'une valeur non nulle à une valeur nulle, et on répète ces étapes à chaque instant t ultérieur pendant une première durée DT1 ;
- lesdits paramètres de fonctionnement du véhicule comportant la vitesse de rotation des roues et un paramètre d'activation de la pédale de frein du véhicule, on déclenche la réalisation des étapes e) à h), en utilisant une deuxième valeur seuil PMAX2 de la pente instantanée, à chaque instant t où la vitesse du véhicule est nulle et où le paramètre d'activation de la pédale de frein passe d'une valeur indiquant l'activation de cette pédale à une valeur indiquant son inactivation et on répète ces étapes à chaque instant t ultérieur pendant une deuxième durée DT2 ;
- lesdits paramètres de fonctionnement du véhicule comportant la vitesse de rotation des roues, on déclenche la réalisation des étapes d) à g) en utilisant une troisième valeur seuil PMAX3 de la pente instantanée à chaque instant t où la vitesse des roues du véhicule est non nulle, pendant une troisième durée DT3 ; et,
- lesdits paramètres de fonctionnement du véhicule comportant la vitesse de rotation des roues, un paramètre d'activation de la pédale de frein du véhicule et un paramètre d'activation de la pédale d'accélération du véhicule, on stoppe la réalisation des étapes d) à g) à partir de chaque instant t où la vitesse du véhicule est nulle, où le paramètre d'activation de la pédale de frein indique son activation et où le paramètre d'activation de la pédale d'accélération indique son inactivation, et ce pendant une quatrième durée DT4 prédéterminée.

## DESCRIPTION DETAILLEE D'UN EXEMPLE DE REALISATION

La description qui va suivre, donnée à titre d'exemple non limitatif, fera bien comprendre en quoi consiste l'invention et comment elle peut être réalisée.

L'invention concerne un procédé de détermination de l'inclinaison d'une route sur laquelle roule un véhicule automobile.

Ce véhicule est ici plus particulièrement équipé de capteurs mesurant la vitesse de rotation V(T) des roues non motrices du véhicule en fonction du temps T et d'un accéléromètre longitudinal rattaché à la caisse du véhicule.

Les capteurs mesurant la vitesse de rotation des roues sont par exemple les capteurs utilisés pour la mise en oeuvre du système de freinage anti-blocage, appelé ABS du véhicule.

L'accéléromètre inclut une chaîne de conditionnement de mesure associée de sorte que cet accéléromètre est adaptée à mesurer l'accélération totale At(T) du véhicule en fonction du temps T.

Cette accélération totale est la somme de l'accélération due à la pente de la route et de l'accélération liée au moteur du véhicule. Ainsi, à l'arrêt sur une route horizontale, la valeur mesurée par cet accéléromètre est nulle.

En outre, le véhicule est ici équipé de capteurs mesurant un paramètre d'activation de chaque pédale de frein et d'accélération.

Les paramètres de fonctionnement du véhicule qui définissent ses conditions de fonctionnement comprennent ici la vitesse des roues du véhicule et l'activation ou l'inactivation des pédales de frein et d'accélération du véhicule.

Une unité de commande électronique du véhicule reçoit les informations transmises par ces différents capteurs. Dans l'exemple décrit ici, les capteurs du véhicule mesurent la vitesse de rotation des roues, l'accélération totale du véhicule et les paramètres d'activation des pédales de frein et d'accélération du véhicule à chaque instant.

On peut envisager en variante que l'unité de commande électronique déclenche la mesure des paramètres d'activation des pédales de frein et d'accélération par les capteurs correspondant en fonction des conditions de fonctionnement du moteur. Par exemple, on peut envisager que l'unité de commande électronique commande la mesure des paramètres d'activation des pédales de frein et d'accélération uniquement lorsque la vitesse de rotation des roues varie d'un pourcentage supérieur à un pourcentage seuil.

Selon le procédé, dans une étape a), à un instant t donné, le capteur de vitesse des roues du véhicule mesure la vitesse de rotation V(t) des roues du véhicule.

L'unité de commande électronique est programmée pour calculer, à cet instant t, la dérivée par rapport au temps T du signal représentatif de la vitesse V(T) des roues en fonction du temps T, qui est égale à l'accélération motrice Am(t) du véhicule à cet instant t.

On définit ici le temps T comme une succession d'instants t.

L'unité de commande électronique reçoit également de l'accéléromètre la mesure de l'accélération totale At(t) du véhicule à cet instant t effectuée dans une étape b).

L'unité de commande électronique est alors programmée pour calculer, dans une étape c), l'accélération résultante Ar(t) du véhicule à l'instant t qui est égale à la soustraction de l'accélération motrice Am(t) à l'instant t à l'accélération totale At(t) à l'instant t du véhicule :

$$Ar(t) = At(t) - Am(t).$$

Dans une étape d), l'unité de commande électronique calcule alors à cet instant t, la pente instantanée P(t) à l'instant t du signal représentatif de l'accélération résultante Ar(T) en fonction du temps T. On peut envisager que la pente instantanée P(t) prise en compte ici soit la dérivée de ce signal ou la valeur absolue de la dérivée de ce signal. Les étapes ultérieure ne sont pas modifiées.

Dans une étape e), l'unité de commande électronique compare ensuite cette pente instantanée P(t) calculée à une valeur seuil PMAX prédéterminée, et, si la pente instantanée P(t) calculée est supérieure à ladite valeur seuil PMAX, l'unité de commande électronique corrige l'accélération résultante Ar(t) calculée à l'instant t pour imposer que cette pente instantanée P(t) soit égale audit instant t à ladite valeur seuil PMAX prédéterminée.

Autrement dit, l'unité de commande électronique calcule la valeur de l'accélération résultante Arc(t) corrigée à l'instant t qui permet d'obtenir une pente instantanée P(t) à l'instant t égale à PMAX, et elle remplace la valeur de l'accélération résultante Ar(t) calculée par la soustraction de l'accélération motrice Am(t) à l'accélération totale At(t) du véhicule par cette valeur Arc(t) corrigée.

Enfin, dans une étape g), l'unité de commande électronique du véhicule utilise cette accélération résultante Arc(t) corrigée pour déterminer l'inclinaison I(t), Ip(t) de la route à l'instant t, en fonction de cette valeur corrigée Arc(t) de l'accélération résultante.

Cette inclinaison I(t) de la route est ainsi calculée dans une étape h) selon la formule suivante :

$$I(t) = \arcsin(Arc(t)/g),$$

où g est la constante d'accélération gravitationnelle terrestre, égale environ à 9,81 m.s$^{-2}$ et où la fonction arcsin désigne la fonction réciproque de la fonction sinus.

L'inclinaison I(t) de la route à l'instant t est ici exprimée en degrés d'angle. Cette inclinaison peut également s'exprimer en pourcentage. L'inclinaison en pourcentage Ip(t) de la route est obtenue par la formule suivante :

$$Ip(t) = 100*\tan(I(t)) = 100*\tan(\arcsin(Arc(t)/g)), \text{ où la fonction tan désigne}$$

où la fonction tan désigne la fonction tangente.

Les valeurs seuils PMAX de la pente instantanée P(t) sont prédéterminées par exemple en fonction de la vitesse ou de l'accélération motrice du véhicule par des essais de calibrage. Elles sont par exemple mises en mémoire sous forme d'abaques ou de tableaux dans l'unité de commande électronique.

Avantageusement, on réalise de préférence les étapes d) à g) à chaque instant t, en déterminant à chaque instant t la valeur seuil PMAX correspondant aux paramètres de fonctionnement du véhicule à l'instant t.

Alternativement, on déclenche à des instants particuliers correspondant à des conditions de fonctionnement particulières, la réalisation des étapes d) à g) avec une valeur seuil PMAX particulière et on répète ces étapes en conservant cette valeur seuil particulière pendant une durée prédéterminée.

La valeur seuil particulière et la durée prédéterminée de répétition sont prédéterminées en fonction des conditions de fonctionnement particulières qui déclenchent la réalisation de ces étapes à cet instant particulier.

Elles sont par exemple prédéterminées par une étape de calibrage.

Dans une première condition de fonctionnement du véhicule, correspondant au démarrage de celui-ci, dans laquelle la vitesse de rotation des roues du véhicule passe d'une valeur non nulle à une valeur nulle, l'unité de commande électronique déclenche la réalisation des étapes d) à g), en utilisant une première valeur seuil PMAX1 de la pente instantanée, et répète ces étapes à chaque instant t ultérieur pendant une première durée DT1.

Cette première durée DT1 est par exemple égale à 2 secondes.

Au démarrage du véhicule, les capteurs de vitesse des roues ne détectent pas immédiatement la mise en mouvement de ces roues. La pente instantanée P(t) du signal représentatif de l'accélération résultante en fonction du temps est alors artificiellement augmentée. La limitation de la pente de ce signal permet de corriger cet artefact et d'obtenir des valeurs plus précises de l'inclinaison de la route dans cette première condition de fonctionnement.

Dans une deuxième condition de fonctionnement du véhicule, correspondant à l'arrêt de celui-ci, dans laquelle la vitesse du véhicule est nulle et dans laquelle le paramètre d'activation de la pédale de frein passe d'une valeur indiquant l'activation de cette pédale à une valeur indiquant son inactivation, l'unité de commande électronique déclenche la réalisation des étapes d) à g), en utilisant une deuxième valeur seuil PMAX2 de la pente instantanée, et répète ces étapes à chaque instant t ultérieur pendant une deuxième durée DT2.

Cette deuxième durée DT2 est par exemple égale à 0,5 seconde.

A l'arrêt du véhicule, le basculement de la caisse du véhicule provoque des oscillations de l'accélération totale mesurée par l'accéléromètre. La limitation de la pente de ce signal permet de limiter ces oscillations et d'obtenir des valeurs plus précises de l'inclinaison de la route dans cette deuxième condition de fonctionnement.

En dehors de ces deux conditions de fonctionnement du véhicule, c'est-à-dire en condition normale de roulage, lorsque la vitesse des roues du véhicule est non nulle, l'unité de commande électronique déclenche la réalisation des étapes d) à g) en utilisant une troisième valeur seuil PMAX3 de la pente instantanée à chaque instant t, pendant une troisième durée DT3.

Cette troisième durée DT3 peut être nulle, de sorte que l'unité de commande électronique prend en compte la valeur seuil de la pente instantanée correspondant aux paramètres de fonctionnement du véhicule à chaque instant du roulage.

Cette valeur seuil est notamment prédéterminée en fonction de la vitesse des deux roues du véhicule et de l'accélération motrice du véhicule pour limiter les perturbations liées aux forts freinages.

Les première, deuxième et troisième valeurs PMAX1, PMAX2, PMAX3 de la pente de l'accélération résultante utilisées dans chacun des cas précédent sont déterminées au moins en fonction de l'accélération motrice ou de la vitesse des roues du véhicule à l'instant du déclenchement de la réalisation des étapes d) à g).

En outre, l'unité de commande électronique stoppe de préférence la réalisation des étapes d) à g) à partir de chaque instant t où la vitesse du véhicule est nulle, où le paramètre d'activation de la pédale de frein indique son activation et où le paramètre d'activation de la pédale d'accélération indique son inactivation, et ce pendant une quatrième durée DT4 prédéterminée. Cette quatrième condition de fonctionnement du véhicule correspondant à l'arrêt complet du véhicule.

Cette quatrième durée DT4 est par exemple définie en fonction du fonctionnement du véhicule comme la durée pendant laquelle la vitesse du véhicule reste ultérieurement nulle.

Ainsi, si le véhicule s'arrête alors que l'inclinaison de la route varie, le retard entre l'inclinaison réelle de la route et l'inclinaison déterminée par le procédé selon l'invention au moment de l'arrêt du véhicule est limité. Ce retard est dû à la limitation de la pente de l'accélération résultante. Il est donc prévu de stopper cette limitation dès l'arrêt total du véhicule.

Les différentes corrections appliquées à l'accélération résultante dans le procédé selon l'invention permettent de déterminer l'inclinaison de la route plus précisément. Cette inclinaison est utilisée dans les stratégies de démarrage et de roulage à faibles vitesses. L'obtention d'une valeur plus précise de l'inclinaison de la route permet donc de réaliser ces étapes de démarrage et de roulage à faibles vitesses plus efficacement, et d'améliorer la mise au point de ces stratégies.

La détermination de l'inclinaison de la route à chaque instant t permet de reconstituer l'inclinaison de la route en fonction du temps T et de réaliser ainsi des profils routiers à des fins de simulation.

Enfin, l'obtention de valeurs précises de l'inclinaison de la route permet de valider les estimateurs d'inclinaison logiciel mis au point.

La présente invention n'est nullement limitée aux modes de réalisation décrits et représentés mais l'homme du métier saura y apporter toute variante conforme à son esprit.

## Revendications

1. Procédé de détermination de l'inclinaison d'une route sur laquelle roule un véhicule, selon lequel, à un instant t :

a) on mesure la vitesse de rotation des roues du véhicule et on en déduit l'accélération motrice Am(t) du véhicule à cet instant t,

b) on mesure l'accélération totale At(t) du véhicule à cet instant t,

c) on calcule l'accélération résultante Ar(t) du véhicule à l'instant t qui est égale à la soustraction de l'accélération motrice Am(t) à l'accélération totale At(t) du véhicule à cet instant t,

h) on détermine l'inclinaison de la route I(t), Ip(t) à l'instant t en fonction de cette accélération résultante Ar(t) calculée,

**caractérisé en ce qu'**on réalise en outre, à la suite de l'étape d), les étapes suivantes :

d) on calcule à cet instant t, la pente instantanée P(t) à l'instant t du signal représentatif de l'accélération résultante Ar(T) en fonction du temps T,
e) on compare cette pente instantanée P(t) calculée à une valeur seuil PMAX prédéterminée, et,
f) si la pente instantanée P(t) calculée est supérieure à ladite valeur seuil PMAX, on corrige l'accélération résultante Ar(t) calculée à l'instant t pour imposer que cette pente instantanée P(t) soit égale audit instant t à ladite valeur seuil PMAX prédéterminée,
g) on utilise cette accélération résultante Ar(t) corrigée pour déterminer l'inclinaison de la route I(t), Ip(t) à l'instant t à l'étape h).

2. Procédé selon la revendication 1, selon lequel la valeur seuil PMAX utilisée à l'étape e), est fonction de paramètres de fonctionnement du véhicule à l'instant t.

3. Procédé selon la revendication 1, selon lequel on déclenche, en fonction des paramètres de fonctionnement du moteur, la réalisation des étapes d) à g) et on répète ces étapes à chaque instant ultérieur au déclenchement pendant une durée prédéterminée DT1, DT2, DT3 au moins en fonction desdits paramètres de fonctionnement du véhicule à l'instant du déclenchement, en utilisant la valeur seuil PMAX de la pente instantanée prédéterminée correspondant aux paramètres de fonctionnement du véhicule à l'instant du déclenchement.

4. Procédé selon la revendication 3, selon lequel on détermine ladite durée prédéterminée en fonction du véhicule concerné et en fonction desdits paramètres de fonctionnement du véhicule, par une étape de calibrage.

5. Procédé selon l'une des revendications 3 et 4, selon lequel, lesdits paramètres de fonctionnement du véhicule comportant la vitesse de rotation des roues, on déclenche la réalisation des étapes d) à g), en utilisant une première valeur seuil PMAX1 de la pente instantanée, à chaque instant t où la vitesse de rotation des roues du véhicule passe d'une valeur non nulle à une valeur nulle, et on répète ces étapes à chaque instant t ultérieur pendant une première durée DT1.

6. Procédé selon l'une des revendications 3 à 5, selon lequel, lesdits paramètres de fonctionnement du véhicule comportant la vitesse de rotation des roues et un paramètre d'activation de la pédale de frein du véhicule, on déclenche la réalisation des étapes e) à h), en utilisant une deuxième valeur seuil PMAX2 de la pente instantanée, à chaque instant t où la vitesse du véhicule est nulle et où le paramètre d'activation de la pédale de frein passe d'une valeur indiquant l'activation de cette pédale à une valeur indiquant son inactivation et on répète ces étapes à chaque instant t ultérieur pendant une deuxième durée DT2.

7. Procédé selon l'une des revendications 3 à 6, selon lequel, lesdits paramètres de fonctionnement du véhicule comportant la vitesse de rotation des roues, on déclenche la réalisation des étapes d) à g) en utilisant une troisième valeur seuil PMAX3 de la pente instantanée à chaque instant t où la vitesse des roues du véhicule est non nulle, pendant une troisième durée DT3.

8. Procédé selon l'une des revendications 1 à 9, selon lequel, lesdits paramètres de fonctionnement du véhicule comportant la vitesse de rotation des roues, un paramètre d'activation de la pédale de frein du véhicule et un paramètre d'activation de la pédale d'accélération du véhicule, on stoppe la réalisation des étapes d) à g) à partir de chaque instant t où la vitesse du véhicule est nulle, où le paramètre d'activation de la pédale de frein indique son activation et où le paramètre d'activation de la pédale d'accélération indique son inactivation, et ce pendant une quatrième durée DT4 prédéterminée.

**Patentansprüche**

1. Verfahren zur Bestimmung des Gefälles einer Straße, auf der ein Kraftfahrzeug fährt, wobei zu einem Zeitpunkt t:

a) die Drehzahl der Räder des Fahrzeugs gemessen wird und die Antriebsbeschleunigung Am(t) des Fahrzeugs zu diesem Zeitpunkt t davon abgeleitet wird,

b) die Gesamtbeschleunigung At(t) des Fahrzeugs zu diesem Zeitpunkt t gemessen wird,

c) die resultierende Beschleunigung Ar(t) des Fahrzeugs zu dem Zeitpunkt t berechnet wird, die gleich der Subtraktion der Antriebsbeschleunigung Am(t) von der Gesamtbeschleunigung At(t) des Fahrzeugs zu diesem Zeitpunkt t ist,

h) das Gefälle der Straße I(t), Ip(t) zu dem Zeitpunkt t in Abhängigkeit von dieser berechneten resultierenden Beschleunigung Ar(t) bestimmt wird,

**dadurch gekennzeichnet, dass** ferner nach dem Schritt d) die folgenden Schritte durchgeführt werden:

d) zu diesem Zeitpunkt t wird das momentane Gefälle P(t) zu dem Zeitpunkt t des Signals, das für die resultierende Beschleunigung Ar(t) in Abhängigkeit von der Zeit T repräsentativ ist, berechnet,

e) dieses berechnete momentane Gefälle P(t) wird mit einem vorbestimmten Schwellenwert PMAX verglichen und,

f) wenn das berechnete momentane Gefälle P(t) größer als der Schwellenwert PMAX ist, wird die resultierende Beschleunigung Ar(t), die zu dem Zeitpunkt t berechnet wird, korrigiert, um festzusetzen, dass dieses momentane Gefälle P(t) zu dem Zeitpunkt t gleich dem vorbestimmten Schwellenwert PMAX ist,

g) diese korrigierte resultierende Beschleunigung Ar(t) wird verwendet, um das Gefälle der Straße I(t), Ip(t) zu dem Zeitpunkt t in Schritt h) zu bestimmen.

2. Verfahren nach Anspruch 1, wobei der Schwellenwert PMAX, der in Schritt e) verwendet wird, von Betriebsparametern des Fahrzeugs zu dem Zeitpunkt t abhängt.

3. Verfahren nach dem Anspruch 1, wobei in Abhängigkeit von den Betriebsparametern des Motors das Durchführen der Schritte d) bis g) ausgelöst wird und diese Schritte zu jedem Zeitpunkt nach dem Auslösen während einer vorbestimmten Dauer DT1, DT2, DT3 mindestens in Abhängigkeit von den Betriebsparametern des Fahrzeugs zum Zeitpunkt des Auslösens wiederholt werden, indem der Schwellenwert PMAX des vorbestimmten momentanen Gefälles, der den Betriebsparametern des Fahrzeugs zum Zeitpunkt des Auslösens entspricht, verwendet wird.

4. Verfahren nach Anspruch 3, wobei die vorbestimmte Dauer in Abhängigkeit von dem betreffenden Fahrzeug und in Abhängigkeit von den Betriebsparametern des Fahrzeugs durch einen Schritt des Kalibrierens bestimmt wird.

5. Verfahren nach einem der Ansprüche 3 und 4, wobei, wobei die Betriebsparameter des Fahrzeugs die Drehzahl der Räder aufweisen, das Durchführen der Schritte d) bis g) ausgelöst wird, indem ein erster Schwellenwert PMAX1 des momentanen Gefälles zu jedem Zeitpunkt t, zu dem die Drehzahl der Räder des Fahrzeugs von einem Wert, der nicht gleich null ist, zu einem Wert, der gleich null ist, übergeht, verwendet wird, und diese Schritte zu jedem weiteren Zeitpunkt t während einer ersten Dauer DT1 wiederholt werden.

6. Verfahren nach einem der Ansprüche 3 bis 5, wobei, wobei die Betriebsparameter des Fahrzeugs die Drehzahl der Räder und einen Parameter des Aktivierens des Bremspedals des Fahrzeugs aufweisen, das Durchführen der Schritte e) bis h) ausgelöst wird, indem ein zweiter Schwellenwert PMAX2 des momentanen Gefälles zu jedem Zeitpunkt t, zu dem die Geschwindigkeit des Fahrzeugs gleich null ist und zu dem der Parameter des Aktivierens des Bremspedals von einem Wert, der das Aktivieren dieses Pedals angibt, zu einem Wert übergeht, der sein Inaktivieren angibt, und diese Schritte zu jedem weiteren Zeitpunkt t während einer zweiten Dauer DT2 wiederholt werden.

7. Verfahren nach einem der Ansprüche 3 bis 6, wobei, wobei die Betriebsparameter des Fahrzeugs die Drehzahl der Räder aufweisen, das Durchführen der Schritte d) bis g) ausgelöst wird, indem ein dritter Schwellenwert PMAX3 des momentanen Gefälles zu jedem Zeitpunkt t, zu dem die Drehzahl der Räder des Fahrzeugs nicht gleich null ist, während einer dritten Dauer DT3 verwendet wird.

8. Verfahren nach einem der Ansprüche 1 bis 9, wobei, wobei die Betriebsparameter des Fahrzeugs die Drehzahl der Räder, einen Parameter des Aktivierens des Bremspedals des Fahrzeugs und einen Parameter des Aktivierens des Gaspedals des Fahrzeugs aufweisen, das Durchführen der Schritte d) bis g) ausgehend von jedem Zeitpunkt t gestoppt wird, zu dem die Geschwindigkeit des Fahrzeugs gleich null ist, zu dem der Parameter des Aktivierens des Bremspedals sein Aktivieren angibt und zu dem der Parameter des Aktivierens des Gaspedals sein Inaktivieren angibt, und dies während einer vorbestimmten vierten Dauer DT4.

**Claims**

1. Method for determining the gradient of a road on which a vehicle is traveling, which comprises, at an instant t:

   a) measuring the speed of rotation of the wheels of the vehicle and deducing therefrom the driving acceleration Am(t) of the vehicle at said instant t,
   b) measuring the total acceleration At(t) of the vehicle at said instant t,
   c) calculating the resulting acceleration Ar(t) of the vehicle at instant t, which is equal to subtracting the driving acceleration Am(t) from the total acceleration At(t) of the vehicle at said instant t,
   h) determining the gradient of the road I(t), Ip(t) at instant t as a function of this calculated resulting acceleration Ar(t),

   **characterized in that** the following steps are also performed after step d):

   d) calculating at this instant t, the instantaneous slope P(t) at instant t from the signal representing the resulting acceleration Ar(t) as a function of time T,
   e) comparing this calculated instantaneous slope P(t) with a predetermined threshold value PMAX, and
   f) if the calculated instantaneous slope P(t) is greater than said threshold value PMAX, correcting the resulting acceleration Ar(t) calculated at instant t to make this instantaneous slope P(t) equal at said instant t to said predetermined threshold value PMAX,
   g) using this corrected resulting acceleration Ar(t) to determine the gradient of the road I(t), Ip(t) at instant t in step h).

2. Method according to Claim 1, according to which the threshold value PMAX used in step e) is a function of the operating parameters of the vehicle at instant t.

3. Method according to Claim 1, according to which steps d) to g) are triggered as a function of the operating parameters of the engine and these steps are repeated at each instant after triggering for a predetermined duration DT1, DT2, DT3 at least as a function of said operating parameters of the vehicle at the instant of triggering, using the threshold value PMAX of the predetermined instantaneous slope corresponding to the operating parameters of the vehicle at the instant of triggering.

4. Method according to Claim 3, according to which said predetermined duration is determined as a function of the vehicle in question and as a function of said operating parameters of the vehicle, by means of a calibration step.

5. Method according to either of Claims 3 and 4, according to which, said operating parameters of the vehicle including the rotation speed of the wheels, steps d) to g) are triggered using a first threshold value PMAX1 of the instantaneous slope, at each instant t where the rotation speed of the wheels of the vehicle changes from a non-null value to a null value, and these steps are repeated at each subsequent instant t for a first duration DT1.

6. Method according to one of Claims 3 to 5, according to which, said operating parameters of the vehicle including the rotation speed of the wheels and an activation parameter of the brake pedal of the vehicle, steps e) to h) are triggered using a second threshold value PMAX2 of the instantaneous slope, at each instant t where the speed of the vehicle is null and where the activation parameter of the brake pedal changes from a value indicating activation of this pedal to a value indicating deactivation thereof, and these steps are repeated at each subsequent instant t for a second duration DT2.

7. Method according to one of Claims 3 to 6, according to which, said operating parameters of the vehicle including the rotation speed of the wheels, steps d) to g) are triggered using a third threshold value PMAX3 of the instantaneous slope, at each instant t where the speed of the wheels of the vehicle is not null, for a third duration DT3.

8. Method according to one of Claims 1 to 9, according to which, said operating parameters of the vehicle including the rotation speed of the wheels, an activation parameter of the brake pedal of the vehicle and an activation parameter of the accelerator pedal of the vehicle, steps d) to g) are stopped from each instant t where the speed of the vehicle is null, where the activation parameter of the brake pedal indicates the activation thereof and where the activation parameter of the accelerator pedal indicates the deactivation thereof, for a fourth predetermined duration DT4.

**EP 2 507 101 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2008086252 A